# EUROPÄISCHE PATENTANMELDUNG

(11) **EP 1 628 246 A1**
(43) Veröffentlichungstag der Anmeldung: **22.02.2006**
(21) Anmeldenummer: 04019877.2
(22) Anmeldetag: 21.08.2004
(51) Int. Cl.: G06Q 10/00

(54) **Datenbank für Buchhaltungszwecke**

(71) Anmelder: SAP AG, 69190 Walldorf (DE)
(72) Erfinder: Bernet, Kerstin, 69245 Bammental (DE); Liepold, Werner, 69168 Wiesloch (DE); Dopf, Georg, 68723 Schwetzingen (DE)
(74) Vertreter: Jany, Peter

(57) **Zusammenfassung**

Die Erfindung betrifft ein computerimplementiertes Verfahren zum Erstellen einer Datenbank für Buchhaltungszwecke, mit der sich Abschlüsse für die Rechnungslegung nach verschiedenen Rechnungslegungsvorschriften erstellen lassen, umfassend die Schritte:
- Speichern von Belegdatensätzen aus Buchungsbelegen in einer Belegdatenbank, wobei die Belegdatensätze einen Belegkopf und einen Datenteil umfassen, wobei der Datenteil Einträge für mindestens zwei Positionen aufweist, die jeweils einen Buchungsbetrag und ein zugeordnetes Konto umfassen,
- Berechnen von Summen aus einem oder mehreren Buchungsbeträgen der gespeicherten Belegdatensätze für die ihnen zugeordneten Konten,
- Speichern der Summen in Summeneinträgen einer Summentabelle.

Erfindungsgemäß ist vorgesehen, daß
- im Kopfteil der Belegdatensätze angegeben wird, für welche der Rechnungslegungsvorschriften der jeweilige Belegdatensatz zu berücksichtigen ist,
- für jede der zu berücksichtigenden Rechnungslegungsvorschriften automatisch Positionen im Datenteil des Belegdatensatzes erzeugt werden, die dieser Rechnungslegungsvorschrift zugeordnet sind,
- in der Summentabelle zu einem Konto für jede der zu berücksichtigenden Rechnungslegungsvorschriften ein oder mehrere Summeneinträge mit ein oder mehreren Summen erstellt werden,
- die Summen in Summeneinträgen zu einer Rechnungslegungsvorschrift nur mit Buchungsbeträgen aus Positionen berechnet werden, die dieser Rechnungslegungsvorschrift zugeordnet sind.

## Beschreibung

Die Erfindung bezieht sich auf ein computerimplementiertes Verfahren zum Erstellen einer Datenbank für Buchhaltungszwecke, mit der sich Abschlüsse für die Rechnungslegung nach verschiedenen Rechnungslegungsvorschriften erstellen lassen, umfassend die folgenden Schritte:
- Speichern von Belegdatensätzen aus Buchungsbelegen in einer Belegdatenbank, wobei die Belegdatensätze einen Belegkopf und einen Datenteil umfassen, wobei der Datenteil Einträge für mindestens zwei Positionen aufweist, die jeweils einen Buchungsbetrag und einen zugeordnetes Konto umfassen,
- Berechnen von Summen aus einem oder mehreren Buchungsbeträgen der gespeicherten Belegdatensätze für die ihnen zugeordneten Konten,
- Speichern der Summen in Summeneinträgen einer Summentabelle.

Ein solches Verfahren ist aus dem Buchhaltungsprogramm R/3 Enterprise von SAP und den dazu gehörenden Handbüchern bekannt. Basis für alle Geschäftsberichte eines Konzerns sind die einzelnen, jeweils durch einen Beleg zu dokumentierenden Geschäftsvorfälle. Einen Geschäftsvorfall stellt zum Beispiel eine von einem Lieferanten eingehende Rechnung dar oder die Entnahme einer Ware aus einem Lager für die Produktion. Bei großen Konzernen fallen jeden Monat mehrere Tausend solcher Geschäftsvorfälle an. Um in akzeptabler Zeit einen Geschäftsbericht erstellen zu können, werden zusätzlich zu den einzelnen Belegen für jedes Konto eines Unternehmens Summen fortgeschrieben, die manchmal auch als Summensätze bezeichnet werden. Diese Summen werden in Summeneinträgen einer Summentabelle gespeichert und geben die Summen von Buchungsbeträgen eines Buchungskontos, z.B. für eine Buchungsperiode; wieder. Über eine ggf. zentrale Belegerfassung werden die einzelnen Geschäftsvorfälle (manuell oder maschinell) erfaßt und als Belegdatensätze in einer Belegdatenbank gespeichert, die zu der Buchhaltungsdatenbank gehört. Belegdatensätze werden in diesem Zusammenhang manchmal auch als Einzelposteneinträge bezeichnet.

Viele Konzerne müssen heute ihre Abschlüsse parallel nach mehreren Rechnungslegungsvorschriften erstellen. Ein deutscher Konzern, der an einer US-amerikanischen Börse notiert ist, muß beispielsweise sowohl einen US-GAAP und/oder IAS-Abschluß als auch einen Abschluß nach HGB vorlegen. Dazu kommen unter Umständen noch weitere Abschlüsse, z.B. für Tochterfirmen in asiatischen Ländern entsprechend den dort geltenden lokalen Vorschriften. Konkret bedeutet dies, daß parallel mehrere Jahresabschlüsse erstellt werden müssen, denen unterschiedliche Rechnungslegungsvorschriften zugrunde liegen. Zum Beispiel müssen Bilanzpositionen zum Ende eines Geschäftsjahres für einen HGB-Abschluß nach strengem Niederstwertprinzip und für einen Abschluß nach US-GAAP zu Stichtagskursen bewertet werden.

Die Buchhaltung eines Konzerns steht deshalb vor der Aufgabe, alle buchhaltungsrelevanten Daten entsprechend verschiedenen Rechnungslegungsvorschriften aufbereiten zu müssen. Softwaretechnisch gab es bisher im Prinzip folgende Möglichkeiten, diese Anforderungen zu erfüllen:

### 1. Parallele Konten

Der Anwender legt zusätzliche Konten (parallele Konten) an. Die Buchungen erfolgen dann entweder auf einem gemeinsamen Konto, wenn sie für alle Rechnungslegungsvorschriften gleich sind, oder auf einem für jede Rechnungslegungsvorschrift spezifischen Konto, wenn sich die Buchungen je nach Rechnungslegungsvorschrift unterscheiden. Für den Jahresabschluß werden für alle Rechnungslegungsvorschriften die gemeinsamen Konten und die Konten für die jeweilige Rechnungslegungsvorschrift ausgewertet.

Eine Konsequenz dieser Vorgehensweise liegt darin, daß die Anzahl der insgesamt zu verwaltenden Konten sehr groß und damit für den Buchhalter unübersichtlich werden kann. Dies gilt insbesondere dann, wenn ein relativ großer Anteil der Buchungen für verschiedene Rechnungslegungsvorschriften unterschiedlich ist. Muß nach mehr als zwei Rechnungslegungsvorschriften berichtet werden, ist diese Methode sehr unübersichtlich und verursacht einen erheblichen Aufwand.

### 2. Zusätzliche Hauptbücher mit separater Datenhaltung

Im SAP-System R/3 Enterprise gibt es eine Applikation FI-SL (special ledger), die den Charakter einer Toolbox besitzt. Damit kann sich ein Kunde eigene Hauptbücher für zusätzliche Rechnungslegungen nach weiteren Rechnungslegungsvorschriften in eigenen Tabellen anlegen. Buchungsvorgänge, die nur für eine dieser zusätzlichen Rechnungslegungen relevant sind, müssen dann über eine eigene Belegerfassung separat für das entsprechende Hauptbuch eingegeben und verbucht werden. Diese zusätzlich angelegten Hauptbücher haben zur Folge, daß sie nicht unmittelbar in die zentrale Buchhaltung integriert sind und deshalb aufwendig miteinander abgeglichen werden müssen.

Wie der Stand der Technik zeigt, lassen sich Konzernabschlüsse mit vertretbarem Aufwand nur noch durch Einsatz von Datenverarbeitungssystemen erstellen, da für die Buchhaltung eines international tätigen Konzerns viele Millionen Buchungsvorgänge erfaßt und ausgewertet werden müssen.

Die einzelnen Buchungspositionen werden in Datenbanken gespeichert, wobei darauf geachtet werden muß, daß das Datenvolumen möglichst gering bleibt, zu Prüfzwecken eine effiziente Kontrolle einzelner Buchungspositionen möglich ist und daß Korrekturbuchungen in allen gemäß den verschiedenen Rechnungslegungsvorschriften zu erstellenden Konzernabschlüssen berücksichtigt werden. Insbesondere der Abgleich zwischen Daten für Abschlüsse nach verschiedenen Rechnungslegungsvorschriften erfordert einen hohen Aufwand und stellt eine mögliche Fehlerquelle dar.

Wird eine Rechnung - aus welchen Gründen auch immer - nach Erfassung geändert, so muß dafür Sorge getragen werden, daß diese Änderung in allen Konten, Journalen und Hauptbüchern, in denen die Rechnung gemäß den verschiedenen Rechnungslegungsvorschriften erfaßt wurde, berücksichtigt wird. Bei Millionen von Buchungsvorgängen stellt dies an die Architektur einer Buchhaltungsdatenbank hohe Anforderungen.

Aufgabe der Erfindung ist es, einen technischen Weg aufzuzeigen, wie mit geringerem Aufwand Abschlüsse nach verschiedenen Rechnungslegungsvorschriften auf Basis einer Datenbankstruktur erstellt werden können und zugleich besser gewährleistet werden kann, daß die verschiedenen Abschlüsse auf übereinstimmendes Datenmaterial zugreifen.

Diese Aufgabe wird durch ein Verfahren der eingangs genannten Art dadurch gelöst, daß
- im Kopfteil der Belegdatensätze angegeben wird, für welche der Rechnungslegungsvorschriften der jeweilige Belegdatensatz zu berücksichtigen ist,
- für jede der zu berücksichtigenden Rechnungslegungsvorschriften automatisch Positionen im Datenteil des Belegdatensatzes erzeugt werden, die dieser Rechnungslegungsvorschrift zugeordnet sind,
- in der Summentabelle zu einem Konto für jede der zu berücksichtigenden Rechnungslegungsvorschriften ein oder mehrere Summeneinträge mit ein oder mehreren Summen erstellt werden,
- die Summen in Summeneinträgen zu einer Rechnungslegungsvorschrift nur mit Buchungsbeträgen aus Positionen berechnet werden, die dieser Rechnungslegungsvorschrift zugeordnet sind.

Bei einem erfindungsgemäßen Verfahren muß die Zahl der benötigten Konten nicht mehr entsprechend der Anzahl der relevanten Rechnungslegungsvorschriften erhöht werden, was einem Buchhalter die tägliche Arbeit wesentlich erleichtert. Zudem sind bei einem erfindungsgemäßen Verfahren alle Daten, die für die verschiedenen Abschlüsse gemäß unterschiedlichen Rechnungslegungsvorschriften relevant sind, nur einmal in einer Datenbank gespeichert, so daß bei Korrekturen oder Prüfungen ein Abgleichbedarf zwischen verschiedenen Datensätzen nicht mehr erforderlich ist und der Speicherbedarf reduziert ist. Für jede Rechnungslegungsvorschrift kann auf der Grundlage einer einheitlichen Datenerfassung und Datenhaltung ein eigenes Hauptbuch geführt werden, ohne daß ein Abgleichbedarf erforderlich ist.

Es gibt bei jedem Unternehmen eine Vielzahl von Geschäftsvorfällen, die hinsichtlich der verschiedenen Rechnungslegungsvorschriften einheitlich bewertet werden. Diese Geschäftsvorfälle sind für alle Abschlüsse relevant und verursachen bei einer manuellen Belegerfassung für den Buchhalter keinen Mehraufwand unabhängig von der Anzahl der zu erstellenden Abschlüsse. Geschäftsvorfälle, die nur für eine einzige Rechnungslegungsvorschrift relevant sind, können ebenfalls über eine zentrale Belegerfassung verbucht werden. Dabei wird in dem Belegkopf des Belegdatensatzes, der den betreffenden Geschäftsvorfall dokumentiert, angegeben, für welchen Abschluß, d.h. für welches Hauptbuch oder welche Rechnungslegungsvorschrift, er relevant ist. In diesem Fall werden nur die Summen für den entsprechenden Abschluß fortgeschrieben. Selbstverständlich kann entsprechend auch für eine Gruppe von Summen für verschiedene Abschlüsse so vorgegangen werden. Dann erfolgt automatisch eine Fortschreibung der Summen für alle Abschlüsse, die zu dieser im Belegkopf des Belegdatensatzes angegebenen Gruppe gehören.

Um zu einem Geschäftsvorfall einen Belegdatensatz zu erzeugen, wird bevorzugt auf einem Bildschirm eine Eingabemaske erzeugt, in die ein Buchhalter die entsprechenden Daten eingibt. Diese Eingabemaske kann ein Eingabefeld aufweisen, in dem explizit eingetragen wird, für welchen Abschluß oder welche Gruppe von Abschlüssen der zugehörige Belegdatensatz zu berücksichtigen ist. Die Angabe des jeweiligen Abschlusses ist dabei selbstverständlich gleichbedeutend mit der Angabe des Hauptbuches, auf dessen Grundlage der Abschluß erstellt wird. Dies kann beispielsweise durch einen entsprechenden Eintrag in ein Feld des Belegkopfes und/oder einer Positionszeile implementiert werden.

Bevorzugt ist dabei, daß in jenen Fällen, in denen kein Eintrag in das entsprechende Eingabefeld erfolgt, der zugehörige Belegdatensatz automatisch für sämtliche Abschlüsse berücksichtigt wird, also davon ausgegangen wird, daß er für alle Rechnungslegungsvorschriften zu berücksichtigen ist. In diesem Fall kann das entsprechende Eingabefeld auch leer bleiben. Da eine große Zahl von Buchungen nach mehreren Rechnungslegungsvorschriften in gleicher Weise erfolgt, läßt sich mit Hilfe der Erfindung der Aufwand zum Erstellen der Abschlüsse weiter reduzieren.

Die Erfindung wird nachfolgend anhand eines Ausführungsbeispiels unter Bezugnahme auf die zugehörigen Figuren näher erläutert. Die in diesem Zusammenhang beschriebenen Besonderheiten der Erfindung können einzeln oder in Kombination verwendet werden, um bevorzugte Ausgestaltungen der Erfindung zu schaffen. Es zeigen:
- Fig. 1: eine Eingabemaske für Einzelposteneinträge;
- Fig. 2: eine Erfassungssicht eines Belegdatensatzes;
- Fig. 3: eine hauptbuchabhängige Sicht des Einzelposteneintrags;
- Fig. 4: ein Diagramm zur Erläuterung eines Belegsplitts; und
- Fig. 5: ein Diagramm einer erfindungsgemäßen Datenbankstruktur.

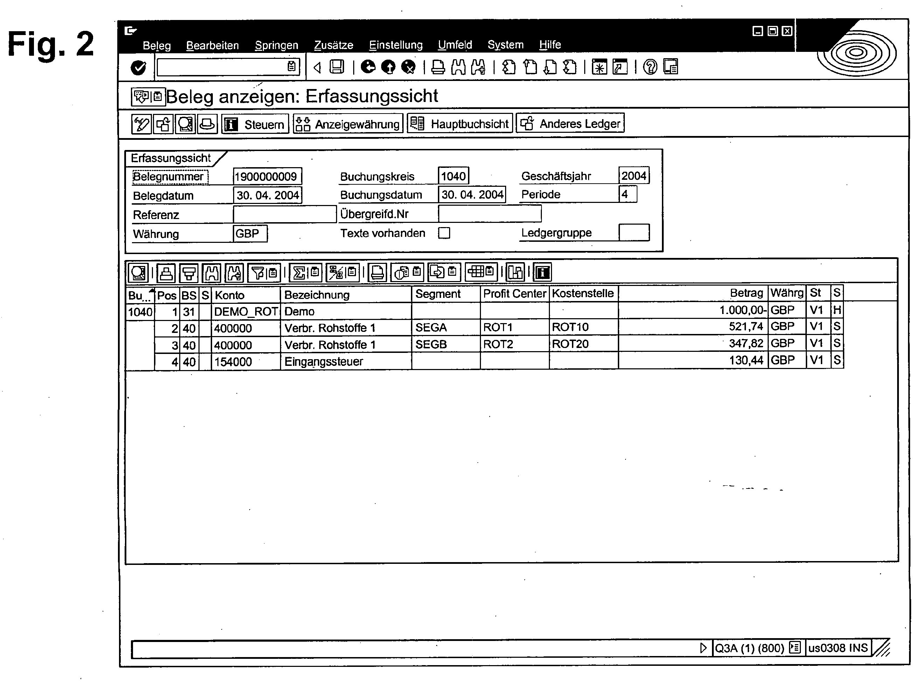

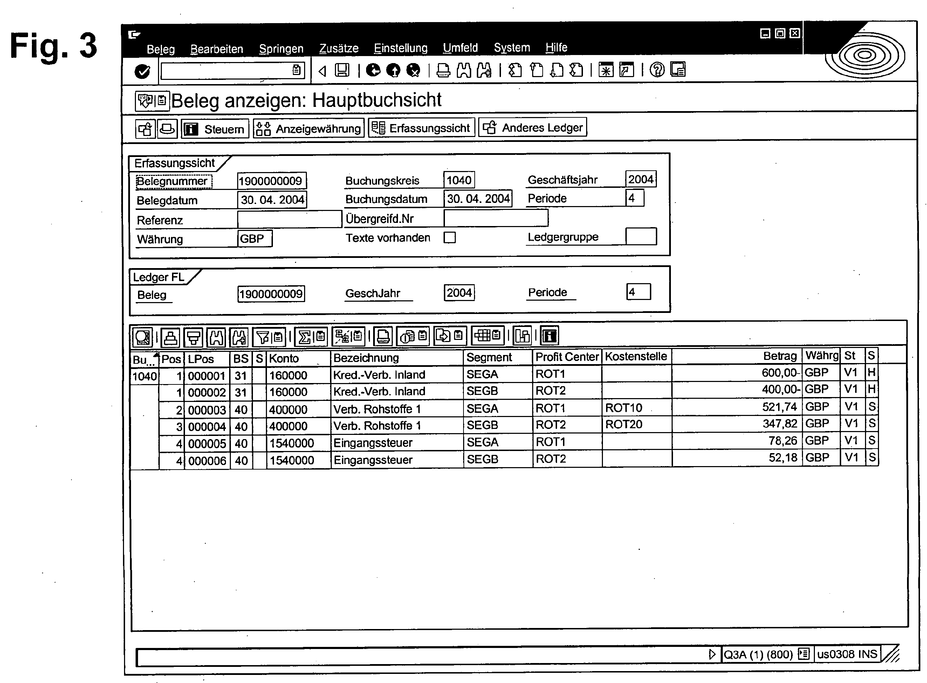

Eine Erfassungssicht (Fig. 2) zeigt hierin den Beleg in der Granularität an, in der ihn ein Buchhalter bei manueller Erfassung in einer Erfassungsmaske eingegeben hat, bzw. in der der Beleg bei automatischer Erfassung über eine Schnittstelle empfangen wurde. Die hauptbuchabhängige Sicht (Fig. 3) zeigt u.a. die für die Summenfortschreibung der betreffenden Hauptbücher gespeicherten Felder an.

Bei dem im folgenden beschriebenen Verfahren zum Erstellen einer Datenbank für Buchhaltungszwecke wird zu jedem Geschäftsvorfall ein Belegdatensatz in einer Belegdatenbank gespeichert, der einem Buchungsbeleg entspricht.

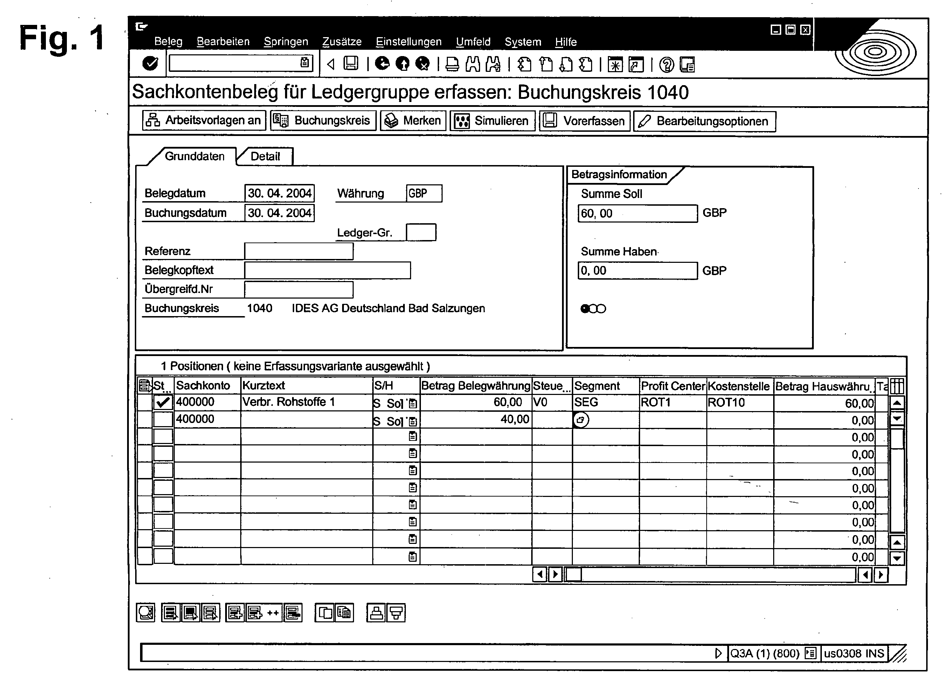

Figur 1 zeigt ein Beispiel einer Eingabemaske, die mehrere Eingabefelder aufweist und von einem erfindungsgemäßen Computerprogramm auf einem Bildschirm eines Computersystems erzeugt wird. In die Eingabefelder werden zum Erfassen eines Geschäftsvorfalls die zu einem Belegdatensatz gehörenden Daten eingegeben.

Ein Belegdatensatz umfaßt einen Belegkopf und einen Datenteil. In der Eingabemaske sind die Eingabefelder des Belegkopfs graphisch abgesetzt oberhalb von den Eingabefeldern des Datenteils, der im Beispiel mit "Position" betitelt ist, angeordnet. In die Eingabefelder des Belegkopfs der Eingabemaske werden ein Buchungskreis, der das zugehörige (Tochter-)Unternehmen identifiziert, ein Belegdatum und ein Buchungsdatum eingegeben. Zusätzlich können in dem Belegkopf auch eine externe Referenznummer sowie zusätzliche Informationen gespeichert werden. Nicht alle im Belegkopf eines Belegdatensatzes gespeicherten Informationen müssen über die Eingabemaske eingegeben werden. Beispielsweise wird eine eindeutige Belegnummer automatisch von dem Computerprogramm vergeben und in dem Belegkopf gespeichert. Ferner kann das Computerprogramm aus dem Belegdatum die zugehörende Buchungsperiode (z.B. Quartal oder Geschäftsjahr) ermitteln und ebenfalls im Belegkopf speichern.

Wichtig für das erfindungsgemäße Verfahren ist das Eingabefeld "Ledger-Gruppe" der Eingabemaske. In diesem Eingabefeld kann angegeben werden, für welche Hauptbücher (Ledger) und damit für welche Abschlüsse der zugehörige Belegdatensatz relevant ist. Diese Zuordnung kann zusätzlich oder alternativ auch automatisch erfolgen, indem beispielsweise der Typ des Geschäftsvorfalls nach vorgegebenen Regeln vom Programm ermittelt wird und daraus die Zuordnung nach weiteren voreinstellbaren Regeln erfolgt. Das Ergebnis kann als editierbarer Vorschlag oder als Festvorgabe in dem Eingabefeld "Ledger-Gruppe" bereits eingetragen sein.

Indem für verschiedene Rechnungslegungsvorschriften jeweils ein eigenes Hauptbuch geführt wird, kann eine Datenbank erzeugt werden, mit der sich ohne großen Aufwand Kontenabschlüsse nach verschiedenen Rechnungslegungsvorschriften erzeugen lassen. Erfolgt in dem Eingabefeld "Ledger-Gruppe" kein Eintrag, so wird der zugehörige Belegdatensatz automatisch für alle Hauptbücher berücksichtigt, d.h. es wird davon ausgegangen, daß er für alle Rechnungslegungsvorschriften zu berücksichtigen ist.

Im einfachsten Fall genügt es, eine einzige Position einzugeben, d.h. eine Zeile der Eingabefelder des Datenteils auszufüllen und in dieser ein Konto und einen Buchungsbetrag anzugeben. Das dazu gehörende Gegenkonto kann in einfachen Fällen bei einer geeigneten Einstellung des Datenverarbeitungssystems automatisch ergänzt werden, so daß der Belegdatensatz einen vollständigen Buchungssatz widerspiegelt. Selbstverständlich kann das (Gegen-)Konto auch von dem Buchhalter eingegeben werden.

Figur 2 zeigt eine sogenannte Erfassungssicht eines Belegdatensatzes. Wie man daran erkennt, umfaßt der Datenteil eines Belegdatensatzes mehrere Positionen, in denen jeweils ein Buchungskonto und ein Buchungsbetrag angegeben sind. Bei dem gezeigten Ausführungsbeispiel sind die Positionen als Zeilen dargestellt. Dabei wird in der ersten Zeile für den Kreditor DEMO ROT eine Verbindlichkeit im Haben gebucht. In den Zeilen 2 und 3 wird auf dem Konto 400000 der entsprechende Aufwand in zwei Teilbeträgen gegengebucht. Der Aufwand verteilt sich auf die beiden Segmente SEG A und SEG B zu ungleichen Teilen. In Zeile 4 wird ferner auf dem Konto 154000 im Soll eine Eingangssteuer verbucht, so daß insgesamt im Soll und im Haben derselbe Betrag verbucht wird und der Belegdatensatz ausgeglichen ist.

Bei dem gezeigten Ausführungsbeispiel wird zusätzlich ein Teil der bereits im Belegkopf enthaltenen Informationen nochmals im Datenteil gespeichert, was eine Datenbank-Suche vereinfacht. Die redundant zusätzlich im Datenteil gespeicherten Informationen sind insbesondere der Buchungskreis und die Währung, in der die Buchung erfolgt. Weitere Eingabefelder der Eingabemaske des Datenteils können dazu dienen, einen Buchungsschlüssel (BS) und eine Information zur steuerlichen Behandlung der Buchung, beispielsweise über den anzuwendenden Mehrwertsteuersatz anzugeben.

Bei dem anhand der Zeilen 1 bis 4 der in Figur 2 gezeigten Erfassungssicht erläuterten Datenteil eines Belegdatensatzes handelt es sich um einen allgemeinen Datenteil. In diesem Datenteil sind hauptbuchunabhängige Buchungsinformationen gespeichert, die für alle betreffenden Hauptbücher relevant sind. Wie man sieht, findet sich bei der in Figur 2 gezeigten Erfassungssicht in dem Feld "Ledger-Gruppe" auch kein Eintrag. Obwohl der in Figur 2 gezeigte Belegdatensatz für alle Hauptbücher relevant ist, ist er nicht für alle Rechnungslegungsvorschriften ausreichend detailliert. Beispielsweise muß für den Anhang eines Konzernabschlusses nach IAS oder US-GAAP eine Segmentberichterstattung erstellt werden, was für einen Abschluß nach anderen Rechnungslegungsvorschriften nicht unbedingt erforderlich ist.

Für eine umfassende Segmentberichterstattung ist es erforderlich, einen Geschäftsvorfall, der mehrere Segmente betrifft, sowohl im Soll als auch im Haben auf die verschiedenen Segmente aufzuteilen. Für manche Rechnungslegungsvorschriften und interne Berichte genügt aber bereits eine Aufteilung des Aufwands, wie sie in der in Figur 2 gezeigten Erfassungssicht zu sehen ist.

Um für die einzelnen Segmente eines Unternehmen eine vollständige Bilanz erstellen zu können, wie es beispielsweise nach IAS gefordert ist, wird aus dem allgemeinen Datenteil eines Belegdatensatzes zusätzlich ein spezifischer Datenteil erzeugt, in dem aus dem allgemeinen Datenteil abgeleitete Buchungsinformationen gespeichert werden, die (nur) für das jeweilige Hauptbuch relevant sind. Verteilt sich der Aufwand einer Rechnung auf mehrere Segmente (im gezeigten Beispiel die Segmente SEG A und SEG B), müssen für jeden Buchungsbetrag Positionen, d.h. Belegzeilen, erzeugt werden, in denen jeweils ein Buchungsteilbetrag dem betreffenden Segment zugeordnet wird. Das kann maschinell oder auch manuell erfolgen. Die betreffenden Segmente können dabei explizit im allgemeinen Datenteil eines Belegdatensatzes angegeben werden oder automatisch aus der Angabe von spezielleren organisatorischen Einheiten eines Unternehmens, z.B. Profitcentern, die eindeutig einem bestimmten Segment zugeordnet sind, abgeleitet werden.

Der Betrag einer Verbindlichkeit gegenüber einem Kreditor und der Betrag einer Eingangssteuer müssen bei einer Belegerfassung aus der Eingangsrechnung übertragen werden und sind deshalb vorerst nicht auf die betreffenden Segmente verteilt (siehe Zeilen 1 und 4 in Figur 2). Beim Erstellen eines spezifischen Datenteils für einen Belegdatensatz wird deshalb zunächst geprüft, ob in dem allgemeinen Datenteil des Belegdatensatzes Buchungsteilbeträge verschiedenen organisatorischen Einheiten (z.B. Segmenten) eines Unternehmens zugeschrieben werden. Falls dies der Fall ist, werden die betreffenden Positionen in Teilpositionen aufgeteilt, mit denen in dem spezifischen Datenteil Buchungsbeträge im Verhältnis der Buchungsteilbeträge den entsprechenden organisatorischen Einheiten zugeschrieben werden. Bei dem gezeigten Beispiel sind dies der Betrag der Verbindlichkeit gegenüber dem Kreditor (Figur 2, Zeile 1) und der Betrag der Eingangssteuer (Figur 2, Zeile 4).

Die Aufteilung dieser Positionen in Teilpositionen erfolgt automatisch bei der Verbuchung. Dabei wird automatisch geprüft, für welche Hauptbücher die im allgemeinen Datenteil angegebenen Segmente als Zusatzkontierung relevant sind. Für jedes dieser Hauptbücher wird ein spezifischer Datenteil erzeugt, der den Belegdatensatz ergänzt. Bei dem erfindungsgemäßen Verfahren wird also einerseits durch die Angabe in dem Belegkopf ein Belegdatensatz insgesamt einem oder mehreren Hauptbüchern zugeordnet, sofern er überhaupt eine für das jeweilige Hauptbuch relevante Position enthält. Andererseits werden die einzelnen Positionen bzw. Teilpositionen jeweils einem oder mehreren Hauptbüchern zugeordnet.

Figur 3 zeigt ein Beispiel einer solchen hauptbuchabhängigen Sicht (Hauptbuchsicht) des anhand der in Figur 2 gezeigten Erfassungssicht erläuterten Belegdatensatzes. Wie man darin sieht, sind bei dieser hauptbuchabhängigen Sicht alle Buchungspositionen jeweils in Teilbeträgen auf die beiden Teilsegmente SEG A und SEG B verteilt, so daß sich insgesamt sechs Buchungszeilen ergeben. Für jede dieser Buchungszeilen wird angegeben, auf welcher Zeile der Erfassungssicht sie beruht (2. Spalte in Fig. 3).

Ein Vorteil dieser Vorgehensweise liegt darin, daß der Belegkopf und der allgemeine Datenteil eines Belegdatensatzes nur an einer Stelle in der Datenbank gespeichert werden müssen und die spezifischen Datenteile bei Bedarf automatisch erzeugt werden können. Auf diese Weise läßt sich das von der Datenbank zu verwaltende Datenvolumen verringern.

Für Abschlüsse, bei denen eine Aufschlüsselung der Buchungsbeträge nach Segmenten nicht oder nur teilweise erforderlich ist, werden spezifische Datenteile erzeugt, die entsprechend weniger Belegzeilen enthalten. Im besonderen, in der Praxis aber eher seltenen Fällen kann der spezifische Datenteil eventuell auch leer sein bzw. entfallen, wenn der allgemeine Datenteil für das betreffende Hauptbuch, d.h. den betreffenden Abschluß, ausreichend ist.

Für jede Rechnungslegungsvorschrift und damit für jedes Hauptbuch kann in der Summentabelle ein Summeneintrag erzeugt werden, der in einem Summendatenteil eine Summe von Buchungsbeträgen eines Kontos der Belegdatensätze enthält. Diese Summeneinträge können laufend aktualisiert werden, so daß auch neu hinzugekommene Belegdatensätze berücksichtigt werden können. Die Summentabelle bzw. die Summen können aber auch periodisch oder nach wählbaren Zeitpunkten vollständig neu berechnet werden.

Jedem Summeneintrag kann ein logischer Schlüssel zugeordnet werden, der angibt, nach welchen Kriterien Buchungsbeträge in dem betreffenden Summeneintrag aufaddiert werden. Der Schlüssel kann eine Reihe von logischen Schlüsselfeldern umfassen, die als solche Kriterien beispielsweise ein Buchungskonto, ein Profitcenter, ein Segment, eine Buchungsperiode o.ä. spezifizieren. Der Schlüssel kann also angeben, welche Buchungsbeträge von welchem Konto aufzuaddieren sind, also welche Belegzeilen zu berücksichtigen sind.

Indem das Segment als Schlüsselfeld in die Summentabelle aufgenommen wird, kann für die betreffenden Abschlüsse basierend auf den Summeneinträgen zusätzlich eine Auswertung nach Segmenten, also eine sogenannte Segmentberichterstattung erfolgen. Eine solche Vorgehensweise ist natürlich nicht nur auf Segmente beschränkt, sondern auch auf weitere Entitäten, wie zum Beispiel Profitcenter als interne Verantwortungsbereiche, oder auch branchenspezifische Entitäten, wie zum Beispiel Titel in der Medienbranche, anwendbar. Durch ein erfindungsgemäßes Verfahren wird es also möglich, Berichte, die man für den Abschluß eines Konzerns benötigt, zum Beispiel für eine Bilanz, auch für eine Segmentberichterstattung oder interne Berichte über andere Entitäten zu verwenden.

Datenbanken sind wegen der üblichen Architektur in der Zahl der Schlüsselfelder beschränkt, z.B. auf 16 Schlüsselfelder. Um einem Summeneintrag trotzdem mehr als die Höchstzahl - hier im Beispiel sechzehn - Schlüsselfelder zuweisen zu können, enthält der Schlüssel jeweils sieben Nummern, die jeweils mit sieben ihnen zugeordneten Schlüsseltabellen in eine ganz bestimmte Kombination von Ausprägungen von logischen Schlüsselfeldern übersetzt werden. Auf diese Weise läßt sich eine nahezu beliebig große Anzahl logischer Schlüsselfelder realisieren, so daß für eine entsprechend große Anzahl von Kriterien wie Konto, Profitcenter, Segment, Buchungsperiode u.ä. Summeneinträge gebildet werden können. Selbstverständlich kann dabei auch eine größere oder kleinere Anzahl von Schlüsseltabellen mit einer entsprechenden Anzahl von Nummern im Schlüssel verwendet werden. Insbesondere kann einem Anwender die Möglichkeit gegeben werden selbst weitere Kriterien vorzugeben und in die Schlüsseltabellen aufzunehmen.

Bei dem beschriebenen Ausführungsbeispiel können Teilbeträge eines Buchungsbetrags verschiedenen Segmenten, Profit Centern oder anderen organisatorischen Einheiten zugeschrieben werden, so daß Kosten und Erträge der verschiedenen Segmente durch eine Auswertung der in der Belegdatenbank gespeicherten Belegdatensätze leicht ermittelt werden können. Der Datenteil eines Belegdatensatzes kann ohne weiteres auch eine wesentlich größere Anzahl von Eingabefeldern pro Zeile enthalten, als dies in den gezeigten Figuren der Fall ist, so daß neben Segmenten beispielsweise für die Medienbranche einzelne Titel erfaßt werden können und eine Segmentberichterstattung oder interne Berichterstattung über verschiedene Projekte beliebig detailliert erfolgen kann, indem die verschiedenen Einträge der Datenbank ausgewertet werden.

Um für verschiedene Profit Center, Projekte oder Segmente möglichst umfangreiche Berichte, gegebenenfalls sogar eine Bilanz, erstellen zu können, werden mit einem erfindungsgemäßen Programm aus den eingegebenen Belegpositionen, mit denen Teilbeträge auf einem der beiden Konten (Zeilen 2 und 3 zu Konto 400000 in Fig. 2) verbucht werden, Teilpositionen erzeugt, in denen für das oder die anderen Konten des Belegdatensatzes Teilbeträge des Buchungsbetrags jeweils verschiedenen Segmenten zugeschrieben werden. Gemäß der in Figur 3 gezeigten Sicht können Teilbeträge eines Buchungsbetrags für einzelne Profit Center oder andere organisatorische Einheiten sowohl im Soll als auch im Haben verbucht werden. Dies wird als Belegsplitt bezeichnet und im folgenden näher erläutert.

Bei dem gezeigten Ausführungsbeispiel erzeugt das Computerprogramm für den Belegdatensatz der Datenbank zwei zusätzliche Zeilen, in denen auf dem Konto 160000 jeweils GBP 400,-- bzw. 600,-- den Segmenten SEG A und SEG B zugeschrieben werden. Für ein Belegsplitting, bei dem Teilbeträge verschiedenen Profit Centern zugeschrieben werden, genügt es, wenn dieses Belegsplitting vom Buchhalter entweder im Soll oder im Haben explizit verbucht wird. Für das oder die anderen Konten erzeugt das Datenverarbeitungsprogramm selbständig ein entsprechendes Belegsplitting, so daß im Prinzip auch für einzelne Profit Center, Segmente oder andere organisatorische Einheiten eines Unternehmens eine Bilanz erstellt werden kann.

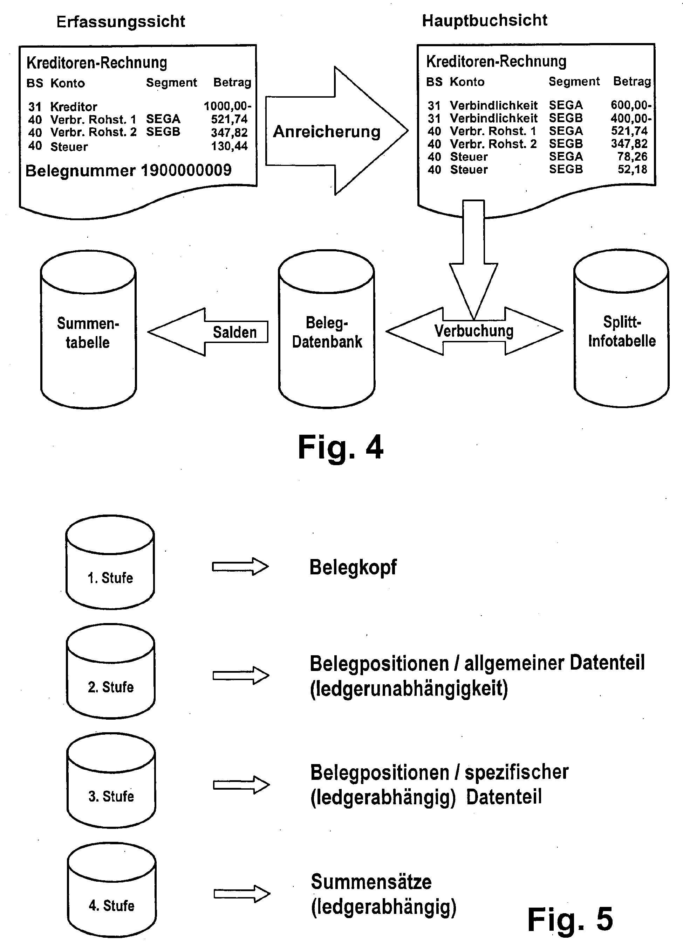

Im folgenden werden anhand des in Figur 4 gezeigten Diagramms die mit einem Belegsplitt verbundenen Verfahrensschritte näher erläutert. Ein Buchhalter erzeugt in einem ersten Schritt mit Hilfe der in Figur 1 gezeigten Eingabemaske, zum Beispiel für den Geschäftsvorfall einer Kreditorenrechnung, einen Belegdatensatz mit der Belegnummer 1900000009. Der Buchhalter gibt dazu vier Positionen (Belegzeilen) ein.

In der ersten Belegzeile wird für den Kreditor "DEMO ROT" (vgl. Figur 2) ein Betrag von GBP 1.000,-- als Verbindlichkeit erfaßt. In der folgenden Zeile wird für den Rohstoff 1, der dem Segment SEG A zugeordnet ist, ein Aufwand von GBP 521,74 erfaßt. In Zeile 3 wird ein Aufwand von GBP 374,82 für den Rohstoff 2 erfaßt und dem Segment SEG B zugeschrieben. Beide Aufwände werden auf dem Konto 400000 gebucht. Der Rechnungsbetrag von GBP 1.000,-- enthält insgesamt eine Eingangssteuer von GBP 130,44, die in Belegzeile 4 aufgeführt ist. Anhand des in dem Belegkopf des Belegdatensatzes spezifizierten Geschäftsvorfalls "Kreditorenrechnung" erkennt der zu dem erfindungsgemäßen Programm gehörende Online-Splitter, daß sowohl die Verbindlichkeit (Zeile 1) als auch die Steuer (Zeile 4) entsprechend dem Verhältnis der Aufwandsbeträge (Zeile 2 und Zeile 3) auf die beteiligten Segmente SEG A und SEG B zu verteilen sind und erzeugt in einem Anreicherungsschritt aus diesen Daten, beispielsweise für ein Journal nach IAS, zwei zusätzliche Belegzeilen, wie es in Figur 3 zu sehen ist.

Mit dem vollständigen, um den spezifischen Datenteil ergänzten Belegdatensatz wird der Buchungsbetrag von GBP 1000,-- gemäß dem Verhältnis der Teilbeträge auf dem Konto 400000 (siehe Fig. 3) den einzelnen Segmenten SEG A und SEG B zugeschrieben. Dieser vollständige Belegdatensatz wird in einer Belegdatenbank gespeichert, wobei zusätzlich in einer Splitt-Info-Tabelle ein Eintrag erzeugt wird, der auf den Belegsplitt im Buchungsbeleg 1900000009 hinweist. Aus den Belegdatensätzen der Belegdatenbank werden in einem nächsten Schritt Summeneinträge einer Summentabelle erzeugt.

Um bei Nachfolgeprozessen, beispielsweise einer Zahlung einer Verbindlichkeit, eine entsprechende Aufteilung von Zahlungs- oder Skontobeträgen auf die beteiligten Segmente SEG A und SEG B vornehmen zu können, wird also die dazu notwendige Information zusätzlich in der Splitt-Info-Tabelle abgelegt. Dies kann beispielsweise dadurch implementiert werden, daß in der Splitt-Info-Tabelle ein Verweis auf den Beleg und auf eine angewendete Regel hinterlegt wird, oder daß die gesplitteten Beträge oder ein Splittverhältnis unter Verweis auf den Beleg gespeichert wird.

Wird bei der Erfassung eines Nachfolgeprozesses über die Eingabemaske die Belegnummer des Belegdatensatzes des ursprünglichen Geschäftsvorfalls (z.B. eines Rechnungseingangs) eingegeben oder auf andere Weise erfaßt, so kann das Computersystem automatisch über die Split-Info-Tabelle auch für den Belegdatensatz eines Nachfolgeprozesses einen Belegsplitt vornehmen.

Die in einer Belegdatenbank gespeicherten Belegdatensätze werden in einem ersten Schritt ausgewertet, indem in einer Summentabelle Summeneinträge erzeugt werden, die in einem Summendatenteil eine Summe von Buchungsbeträgen eines Buchungskontos der Belegdatensätze enthalten. Diese Summeneinträge werden regelmäßig automatisch aktualisiert, um zwischenzeitlich neu hinzugekommene Belegdatensätze zu erfassen.

Für jedes Hauptbuch, d.h. für jeden Abschluß, können je Buchungskreis, Buchungsperiode, Konto, Segment und weiteren flexibel einstellbaren Klassifizierungen jeweils Summeneinträge erzeugt werden. Diese zusätzlichen Klassifizierungen können für jedes Hauptbuch, d.h. für jede Rechnungslegungsvorschrift individuell eingestellt werden. Damit kann für jede Rechnungslegungsvorschrift, repräsentiert durch das jeweilige Hauptbuch, ein Geschäftsbericht mit einem Abschluß oder ein interner Bericht einfach und schnell entsprechend den Vorgaben der Konzernleitung erstellt werden. Aus den einzelnen Summeneinträgen läßt sich in einem nächsten Schritt für jede relevante Rechnungslegungsvorschrift eine Bilanz erstellen. Dies kann automatisch geschehen, da die einzelnen Summeneinträge, die zu einem bestimmten Hauptbuch gehören, jeweils einer bestimmten Rechnungslegungsvorschrift entsprechen.

Eine Besonderheit des erfindungsgemäßen Verfahrens liegt darin, daß zu jedem Belegdatensatz, d.h. für jeden Beleg, mehrere Sichten erzeugt werden können: zunächst die hauptbuchunabhängige Erfassungssicht (Figur 2), die den Belegdatensatz mit seinem allgemeinen Datenteil anzeigt, wie ihn der Buchhalter in der Eingabemaske eingegeben hat oder wie er über eine maschinelle Schnittstelle empfangen wurde. Zusätzlich kann für jedes Hauptbuch eine hauptbuchabhängige Belegsicht erzeugt werden, in der ein spezifischer Datenteil erzeugt und gespeichert wird. In der hauptbuchabhängigen Belegsicht werden alle für eine Fortschreibung der zu dem betreffenden Hauptbuch gehörenden Summeneinträge der relevanten Felder bzw. Belegzeilen angezeigt (siehe Figur 2 und 3). Die hauptbuchabhängigen Belegsichten können insbesondere auch die durch den Online-Splitt entstandenen zusätzlichen Belegpositionen enthalten. Jede dieser zusätzlichen Belegpositionen kann vorteilhafterweise eindeutig mit einer Zeile der Erfassungssicht verknüpft sein. Alle in der hauptbuchabhängigen Belegsicht aufgeführten Buchungsteilbeträge ergeben in der Summe genau den Buchungsbetrag der zugrundeliegenden Zeile der Erfassungssicht. Die hauptbuchabhängige Belegsicht kann zusätzlich Verrechnungspositionen enthalten, wenn z.B. eine vollständige Bilanz für ein bestimmtes Segment erstellt werden soll und folglich auch jeder Belegdatensatz pro Segment einen Saldo von Null aufweisen muß.

Auf diese Weise ergibt sich die in Figur 5 gezeigte Datenstruktur. Die erste Stufe dieser Datenstruktur wird von dem Belegkopf der Belegdatensätze gebildet. Die zweite Stufe wird von dem allgemeinen Datenteil der Belegdatensätze gebildet (Belegpositionen). Als dritte Stufe folgt der spezifische Datenteil der Belegdatensätze. Darauf bauen als vierte Stufe der Datenstruktur die Summeneinträge auf.

## Patentansprüche

1. Computerimplementiertes Verfahren zum Erstellen einer Datenbank für Buchhaltungszwecke, mit der sich Abschlüsse für die Rechnungslegung nach verschiedenen Rechnungslegungsvorschriften erstellen lassen, umfassend die Schritte:
- Speichern von Belegdatensätzen aus Buchungsbelegen in einer Belegdatenbank, wobei die Belegdatensätze einen Belegkopf und einen Datenteil umfassen,
wobei der Datenteil Einträge für mindestens zwei Positionen aufweist, die jeweils einen Buchungsbetrag und ein zugeordnetes Konto umfassen,
- Berechnen von Summen aus einem oder mehreren Buchungsbeträgen der gespeicherten Belegdatensätze für die ihnen zugeordneten Konten,
- Speichern der Summen in Summeneinträgen einer Summentabelle,
**dadurch gekennzeichnet, daß**
- im Kopfteil der Belegdatensätze angegeben wird, für welche der Rechnungslegungsvorschriften der jeweilige Belegdatensatz zu berücksichtigen ist,
- für jede der zu berücksichtigenden Rechnungslegungsvorschriften automatisch Positionen im Datenteil des Belegdatensatzes erzeugt werden, die dieser Rechnungslegungsvorschrift zugeordnet sind,
- in der Summentabelle zu einem Konto für jede der zu berücksichtigenden Rechnungslegungsvorschriften ein oder mehrere Summeneinträge mit ein oder mehreren Summen erstellt werden,
- die Summen in Summeneinträgen zu einer Rechnungslegungsvorschrift nur mit Buchungsbeträgen aus Positionen berechnet werden, die dieser Rechnungslegungsvorschrift zugeordnet sind.

2. Verfahren nach Anspruch 1, wobei die Angabe der zu berücksichtigenden Rechnungslegungsvorschriften automatisch erfolgt.

3. Verfahren nach Anspruch 1 oder 2, **dadurch gekennzeichnet, daß** zum Eingeben von Belegdatensätzen auf einem Bildschirm eine Eingabemaske mit Eingabefeldern für den Belegkopf und den Datenteil des zu erstellenden Belegdatensatzes erzeugt wird, wobei in der Eingabemaske die Eingabefelder des Belegkopfs graphisch von den Eingabefeldern des Datenteils abgesetzt sind.

4. Verfahren nach Anspruch 3, **dadurch gekennzeichnet, daß** die Eingabefelder des Belegkopfs oberhalb von den Eingabefeldern des Datenteils angeordnet sind.

5. Verfahren nach Anspruch 3 oder 4, **dadurch gekennzeichnet, daß** in einem weiteren Eingabefeld des Belegkopfs eingetragen werden kann, für welchen Abschluß oder für welche Abschlüsse der zugehörige Belegdatensatz relevant ist.

6. Verfahren nach Anspruch 5, **dadurch gekennzeichnet, daß** ein Belegdatensatz, in dessen weiterem Eingabefeld kein Eintrag eingetragen wurde, für alle Abschlüsse berücksichtigt wird.

7. Verfahren nach einem der vorhergehenden Ansprüche, **dadurch gekennzeichnet, daß** in dem Belegkopf der Belegdatensätze ein Belegdatum und/oder ein Buchungsdatum angegeben werden.

8. Verfahren nach einem der vorhergehenden Ansprüche, **dadurch gekennzeichnet, daß** in dem Belegkopfs der Belegdatensätze ein Buchungskreis angegeben wird.

9. Verfahren nach einem der vorhergehenden Ansprüche, **dadurch gekennzeichnet, daß** in dem Datenteil eines Belegdatensatzes mindestens ein Sollkonto und ein Haben-Konto als Konten angegeben werden, wobei Buchungsteilbeträge auf einem Konto verschiedenen organisatorischen Einheiten eines Unternehmens zugeschrieben werden können.

10. Verfahren nach einem der vorhergehenden Ansprüche, **dadurch gekennzeichnet, daß** ein Belegdatensatz einen allgemeinen Datenteil hat, in dem allgemeine, für alle Abschlüsse relevante Buchungsinformationen gespeichert sind, und dazu ein spezifischer Datenteil erzeugt wird, in dem aus dem allgemeinen Datenteil abgeleitete Buchungsinformationen gespeichert werden, die für den jeweiligen Abschluß relevant sind.

11. Verfahren nach Anspruch 9 oder 10, **dadurch gekennzeichnet, daß** beim Erstellen eines spezifischen Datenteils für einen Belegdatensatz geprüft wird, ob in dem allgemeinen Datenteil des Einzelposteneintrags Buchungsteilbeträge verschiedenen organisatorischen Einheiten eines Unternehmens zugeschrieben werden, und falls dies der Fall ist, in dem spezifischen Datenteil Buchungsbeträge des allgemeinen Datenteils im Verhältnis der Buchungsteilbeträge den entsprechenden organisatorischen Einheiten zugeschrieben werden.

12. Verfahren nach Anspruch 10 oder 11, **dadurch gekennzeichnet, daß** der Belegkopf und der allgemeine Datenteil eines Belegdatensatzes nur einmal in der Datenbank gespeichert und die spezifischen Datenteile automatisch erzeugt werden.

13. Verfahren nach einem der vorhergehenden Ansprüche, **dadurch gekennzeichnet, daß** durch einen Schlüssel festgelegt wird, nach welchen Kriterien die Summeneinträge aus den verschiedenen Belegdatensätzen gebildet werden, wobei der Schlüssel mehrere logische Schlüsselfelder aufweist, die diese Kriterien angeben.

14. Verfahren nach Anspruch 13, **dadurch gekennzeichnet, daß** der Schlüssel eine Nummer enthält, die mit einer Schlüsseltabelle in eine bestimmte Ausprägung von logischen Schlüsselfeldern übersetzt wird.

15. Verfahren zum Erstellen eines Konzernabschlusses, bei dem eine mit einem Verfahren nach einem der vorhergehenden Ansprüche erstellte Datenbank verwendet wird.

16. Computerprogrammprodukt, das direkt in den Speicher eines digitalen Computers geladen werden kann und Softwareabschnitte umfaßt, mit denen die Schritte eines Verfahrens nach einem der Ansprüche 1 bis 14 ausgeführt werden, wenn das Produkt auf einem Computer läuft.

17. Computergeeignetes Speichermedium mit einem Computerprogrammprodukt nach Anspruch 16.

18. Datenbanknetzwerksystem, enthaltend ein Computerprogrammprodukt nach Anspruch 17.

19. Elektronische Datenstruktur für Buchhaltungsbelege aufweisend einen Belegkopf und einen Datenteil, **dadurch gekennzeichnet, daß** im Belegkopfteil angegeben ist, für welche Rechnungslegungsvorschriften der Buchhaltungsbeleg zu berücksichtigen ist.

20. Datenstruktur nach Anspruch 19, **dadurch gekennzeichnet, daß** der Datenteil einen allgemeinen und einen spezifischen Datenteil umfaßt, wobei in dem allgemeinen Datenteil Buchungsinformationen gespeichert sind, die für alle Rechnungslegungsvorschriften einer Buchhaltung zu berücksichtigen sind, und in dem spezifischen Datenteil Buchungsinformationen gespeichert sind, die speziell für eine oder mehrere Rechnungslegungsvorschriften der Buchhaltung zu berücksichtigen sind.

21. Datenstruktur nach Anspruch 19 oder 20, **dadurch gekennzeichnet, daß** sie Summeneinträge umfaßt, die in einer Summentabelle gespeichert und einem Buchungskonto zugeordnet sind, wobei
- die Datenstruktur für jede der zu berücksichtigenden Rechnungslegungsvorschrift einen oder mehrere Summeneinträge aufweist, und
- die Summeneinträge Summen enthalten, die jeweils mit Buchungsbeträgen von Buchungsbelegen berechnet wurden, die der jeweiligen Rechnungslegungsvorschrift zugeordnet sind.

22. Datenstruktur nach einem der Ansprüche 19 bis 21, **dadurch gekennzeichnet, daß** die Datenteile Positionen enthalten, die jeweils einer oder mehreren Rechnungslegungsvorschriften zugeordnet sind.
